# EUROPEAN PATENT APPLICATION

(11) **EP 1 155 729 A1**
(43) Date of publication of application: **21.11.2001**
(21) Application number: 01304213.0
(22) Date of filing: 10.05.2001
(51) Int. Cl.: B01D 53/047, A62B 15/00, A62B 23/00

(54) **Method and system for removing chemical and biological agents from air**

(30) Priority: 17.05.2000 GB 0011957
(71) Applicant: Pall Corporation, East Hills, New York 11548 (US)
(72) Inventor: Cassidy, Ronald Frederick, Waterlooville, Hampshire PO7 7NH (GB)
(74) Representative: Knott, Stephen Gilbert

(57) **Abstract**

In the removal of chemical and biological agents from air, the air is passed through a pressure swing adsorber including a layer mesoporous carbon (20) and then a 13X Zeolite 21. The mesoporous carbon filter (20) removes higher boiling point agents and the 13X Zeolite (21) removes lower boiling point agents.

## Description

The invention relates to the removal of chemical and biological agents from air and in particular to such removal from air for breathing by humans.

The removal of chemical and biological agents from air for breathing by humans has long been a problem. GB-A-2238490 contains a discussion of previously known methods and systems for such removal. GB-A-2238490 proposes a system for the removal of such agents including compressing the air, purifying the compressed air in a pressure swing adsorber and filtering the compressed air through a filter intercepting particulates.

Such systems have been successful in removing a wide variety of chemical and biological agents. The invention seeks to provide an improved system of this general type.

According to a first aspect of the invention, there is provided a method of removing chemical and biological agents from air for breathing by humans comprising removing higher boiling point agents from the air and then passing the air through an adsorbent in a pressure swing adsorber to remove lower boiling point agents and water vapour.

According to a second aspect of the invention, there is provided a system for removing chemical and biological agents from air for breathing by humans comprising means for removing higher boiling point agents from the air and a pressure swing adsorber for receiving air from the removing means and including an adsorbent for removing lower boiling point agents and water vapour from the air.

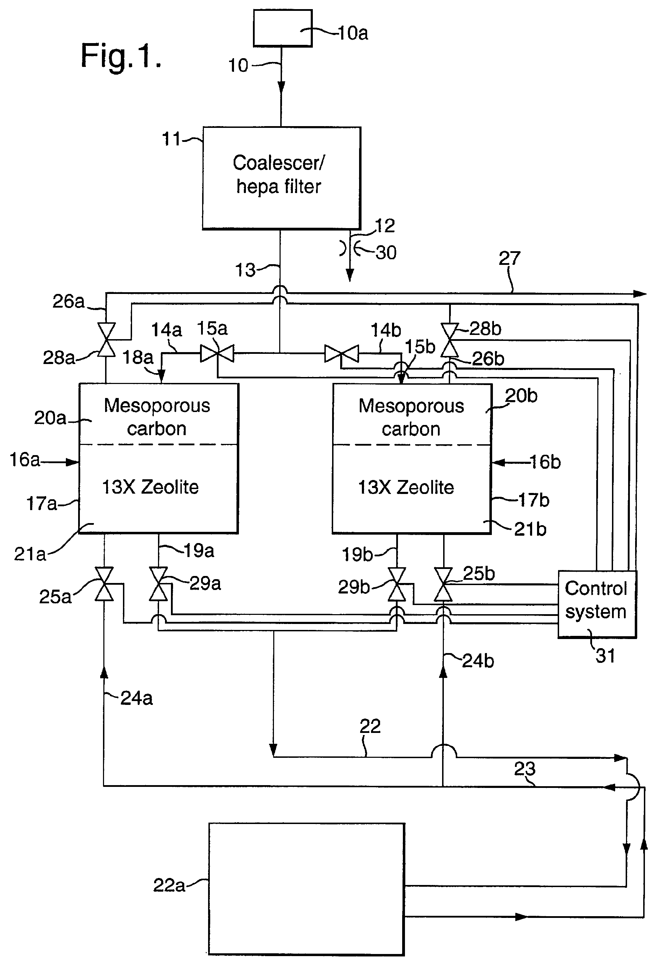

The following is a more detailed description of an embodiment of the invention, by way of example, reference being made to the accompanying drawings in which: -
Figure 1 is a schematic representation of a system for removing chemical and biological agents from air for breathing by humans,
Figure 2 is a plan view from above of a combined coalescer and filter incorporated in the filter of Figure 1 and,
Figure 3 is a section on the line A -A of Figure 2.

Referring to the drawing, the system comprises a compressed air inlet 10 that leads from a source of compressed air 10a. This source 10a may, for example, be a dedicated turbine or may be an air bleed in the case where, for example, the apparatus is used in an aircraft or other system having a power source producing compressed air.

In this latter case, the pressure of the inlet air may need to be controlled to make it compatible with the requirements of the system.

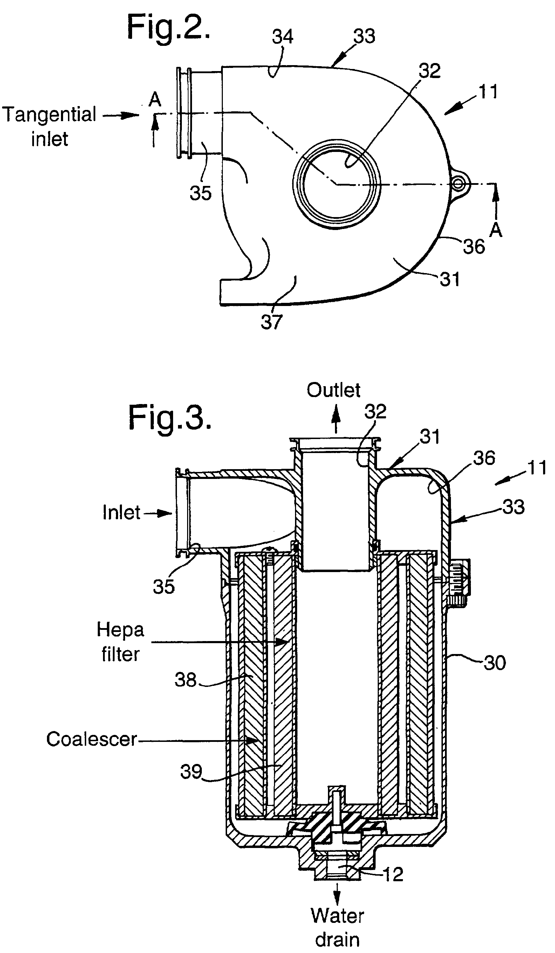

The air inlet 10 leads to a combined coalescer and filter 11. The combined coalescer and filter 11 is best seen in Figures 2 and 3. Referring to those Figures, the combined coalescer and filter 11 comprises a bowl 30 closed at its upper end by a combined inlet/outlet 31. A liquid drain 12 is provided at the lower end of the bowl 30. These parts may, for example, be made of metal. The combined inlet/outlet 31 includes a central vertical outlet passage 32 surrounded by a vertical wall 33 having an initial generally straight portion 34 leading from an inlet 35 that is tangential to the succeeding semi-cylindrical portion of the wall 36. The wall then terminates in a further generally straight portion 37.

The bowl 30 encases a coalescer 38 and an HEPA filter 39. The coalescer 38 is an annular pleated element with an incorporated lint-like layer. The HEPA filter 39 is located within the core of the coalescer 38 co-axially therewith and may, for example, be formed by a pleated glass fibre material having a rating of, for example, 0.2 microns. The outlet passage 32 extends from the centre of the HEPA filter 39.

It will be appreciated that the coalescer 38 and the HEPA filter 39 are of conventional design and will not, therefore, be described in further detail.

The outlet passage 32 of the filter 11 connects with first and second inlet branches 14a,14b, each controlled by respective first and second inlet valves 15a,15b. The first and second inlet branches 14a,14b lead to respective first and second pressure swing adsorbers 16a,16b. The first and second pressure swing adsorbers 16a,16b are preferably identical so only the first pressure swing adsorber 16a will be described; it being understood that the second pressure swing adsorber 16b is preferably similarly constructed.

The first pressure swing adsorber 16a comprises a housing 17a having an inlet 18a connected to the associated branch 14a and an outlet 19a. Adjacent the outlet 19a is a layer of mesoporous carbon 20a. Preferably, this is the mesoporous carbon 20a sold under the trade name BAX 1100, although other mesoporous carbons may be used.

In this specification, the term "mesoporous carbon" refers to porous carbon material in which the pores have an average diameter of between 20Å and 500Å. It will be appreciated that this does not exclude some of the carbon being microporous or macroporous but requires simply that, considered overall, the carbon is broadly mesoporous.

After the layer of mesoporous carbon 20a, there is a layer 21a of 13X Zeolite, although other adsorbents may be used. The adsorbent material is in the form of beads or pellets which may be bonded to one another by a polymeric binding agent, such as polyethylene. The construction and operation of such adsorbents is described in more detail in, for example, GB-B-2238490 and so will not be described here in detail.

The first outlet 19a from the first pressure swing adsorber 16a and the second outlet 19b from the second pressure swing adsorber 16b are controlled by respective first and second outlet valves 29a,29b and combine in a single feedline 22 which is connected to a zone 22a to be provided with air for breathing by humans. There is also a purge line 23 leading from the zone 22a and dividing into first and second purge inlet branches 24a,24b connected to the outlet sides of respective first and second pressure swing adsorbers 16a,16b. The first and second purge inlet branches 24a,24b are controlled by respective first and second purge inlet valves 25a,25b. In addition, the first and second adsorbers 16a,16b have respective first and second purge outlet lines 26a,26b leading to a single purge outlet 27. The first and second purge outlet lines 26a,26b are controlled by respective purge outlet line valves 28a,28b.

The apparatus operates as follows.

The externally sourced compressed air is fed to the filter 11. The apparatus is used in situations where the air may include contamination by nuclear, biological or chemical agents. The purpose of the apparatus is to remove such agents, hereinafter referred to as NBC agents, from the air. It will also be appreciated that the air is very likely to include water vapour and water and other aerosols and, particularly in humid climates, the level of such aerosols can be high.

The air is received by the combined coalescer and filter 11 entering through the tangential inlet 35. The air then passes around the semi cylindrical wall 38 and water and other liquid particles will tend to coalesce on the wall 37 and then drop through the bowl 30 to the drain 12. The air, along with mists and other small particles such as bacterial particles, then enters the bowl 30 and passes through the coalescer 38. This coalesces the mists which then drop through the coalescer 38 to the liquid drain 12. Finally, the air, with any remaining particles, passes to the HEPA filter 39 where small contaminated particles and biological particles are removed. The air then leaves via the outlet passage 32. Accordingly, the air leaving the filter 11 through the outlet 13 is depleted of liquid aerosols, contaminated particles and biological particles but may still contain molecular contaminants.

The air then passes to one of the first and second pressure swing adsorbers 16a,16b. As will be described below, the first and second pressure swing adsorbers 16a,16b are cycled to regenerate them so that, at any one time, one pressure swing adsorber 16 is operative while the other pressure swing adsorber 16 is being regenerated. For the purposes of the present description, it will be assumed that the first pressure swing adsorber 16a is adsorbing and the second pressure swing adsorber 16b is being regenerated. In this case, the first inlet valve 15a, the first outlet valve 29a, the second purge inlet valve 25b and the second purge outlet valve 28b are open and the second inlet valve 15b, the second outlet valve 29b, the first purge inlet valve 25a and the first purge outlet valve 28a are closed. As a result, all the air from the filter 11 passes to the first pressure swing adsorber 16a.

In the first pressure swing adsorber 16a, the air contacts the mesoporous carbon 20a. The usefulness of the mesoporous carbon 20a is based on the property of NBC agents which is that they are all capable of being physically adsorbed. Thus, whilst the chemistry and molecular size and shape of NBC agents may vary significantly, this basic adsorption phenomenon is common to all NBC agents. However, as the boiling point of the NBC agent decreases, so does the efficiency of physical adsorption by carbon filters.

In this regard, it will be appreciated that NBC agents that have very low boiling points will in general evaporate before they reach the apparatus. Those that have very high boiling points will be in the form of liquid or solid particles and will be removed by the filter 11. Accordingly, the mesoporous carbon 20a and the 13X Zeolite 21a are required to remove NBC agents having boiling points between such very low and very high boiling points. Accordingly, the terms "higher boiling point" and "lower boiling point" when used in relation to NBC agents are relative terms describing agents between these extremes.

Accordingly, the mesoporous carbon 21a adsorbs all of the relatively higher boiling point NBC agents. Mesoporous carbon is preferred because microporous carbon will adsorb but not desorb and macroporous carbon will not adsorb. The air leaving the mesoporous carbon 20a is thus depleted of high boiling point NBC agents. It thus contains lower boiling point NBC agents and water vapour, which is also not adsorbed by the mesoporous carbon 20a.

The 13X Zeolite particles 21a adsorb lower boiling point NBC agents and water vapour very efficiently. It has been found that the efficiency of the 13X Zeolite 21a is increased significantly by the removal of the higher boiling point NBC agents by the mesoporous carbon 20a, since 13X Zeolite has a tendency to react chemically with adsorbed higher boiling point NBC agents which can thus not subsequently be desorbed. This eventually reduces the capability of the 13X Zeolite 21a to adsorb lower boiling point contaminants so that NBC agents may pass through the adsorber to give contaminated air at the outlet.

After the air has passed through the 13X Zeolite 21a, it leaves via the outlet 19a and passes to the zone in which the air is to be breathed by humans. The air is depleted of all NBC agents and also of water vapour. It will be appreciated that the air may be conditioned by a suitable conventional air conditioner before being passed to the zone to adjust the temperature and humidity of the air.

As discussed above, the first and second pressure swing adsorbers 16a,16b are cycled. The cycle time may, for example, be comparatively short, for example less than 10 seconds and preferably 8 seconds. As one pressure swing adsorber 16a,16b is treating air from the filter 11, the other pressure swing adsorber 16b,16a is being purged and regenerated. The purge regeneration of the second pressure swing adsorber 16b will now be described.

Low pressure air from the zone is passed through the purge line 23 and then through whichever branch 24a or 24b has the associated purge inlet valve 25a or 25b open. For the purposes of this description, it will be assumed that the second purge inlet valve 25b is open (with the first purge inlet valve 25a closed) so that the air passes through the second branch 24b to the second pressure swing adsorber 16b. In the second pressure swing adsorber 16b, the low pressure air passes across and through the 13X Zeolite layer 21a releasing trapped molecules from the Zeolite molecular sieve and passing them with the air to the mesoporous carbon 20b layer performing a similar purging operation on molecules adsorbed by the mesoporous carbon 20b. The air, together with the desorbed molecules (which will include water vapour and NBC agents) then passes through the second purge outlet line 26b to the purge outlet 27 from which they are released into the ambient atmosphere outside the zone.

The operation of the valves 15a,15b, 25a,25b, 28a,28b, 29a,29b is controlled by a control system 31. This cycles the adsorption/purging of the first and second pressure swing adsorbers 16a,16b in accordance with a predetermined cycle. The volumes of the mesoporous carbon 20 and of the 13X Zeolite 21 are, however, calculated to provide sufficient adsorption to deal with all expected volumes and concentrations of NBC agents.

It is expected that an apparatus as described above with reference to the drawing will not suffer from any build-up of retained NBC agents and water vapour, that is to say that the purge cycle will always leave generally the same low level of retained matter over repeated cycling. However, in order to ensure that there has been no build-up of such retained matter, it is possible to subject the apparatus to a thermal decontamination clean-up cycle. This cycle is performed when there is no threat of NBC agents during decontamination.

In the clean-up cycle, heated air (at, for example, 180°C - 190°C) is used in the purge cycle (rather than unheated air) and the heated air sweeps through the first and second pressure swing adsorbers 16a,16b and this acts to remove any residual matter from the first and second pressure swing adsorbers 16a,16b and pass it to the purge outlet 27. It may take a number of purge cycles with heated air to heat-up the 13X Zeolite layers 21a and 21b to desorb them.

An apparatus described above with reference to the drawing has been tested by Chemical and biological defence Agency at Porton Down. The test used a single pressure swing adsorber 16 of the kind described above with reference to the drawings operating under the same conditions of flow velocity and residence times as would be used in a working apparatus. The performance of the pressure swing adsorber 16 was tested using the nerve agent simulant DMMP (dimethyl methylphosphonate), the mustard agent simulant 2CEEE (2 chloro ethylethylether) GD (Soman), HD (mustard agent), PS (Chloropicrin), AC (hydrogen cyanide), CK (Cyanogen Chloride), isobutene, PFIB (perfluoroisobutene) , freon 134a, the low boiling point simulant freon 23 and the general contaminants Avtur (aviation fuel), octane and ethanol. In each case, assessments were carried out under A1 (hot dry) and B3 (hot humid) conditions of meteorology (with the exception of assessments using GD and HD which were carried out under A1 conditions only (to minimize the risks associated with handing these more hazardous agents)). The agent and simulant doses used generally ranged between 300-120,000 mg min m⁻³.

The air leaving the outlet 19 was analysed using sensitive flame ionization detectors, a gas chromatograph and a mass spectrometer for any traces of the agents and simulants. In addition, for certain of the substances set out above, samples of the air were taken and analysed using sensitive adsorbent sampling tubes and the Chemical Agent Monitor (CAM). These additional techniques provided greater levels of detection sensitivity to try and demonstrate whether there would be any risk of personnel being exposed to low level dosages of agents such as DMMP since low level exposure to nerve agents can give rise to miosis which can affect the ability of operators to use weapon systems or to manoeuvre. In addition, during and after the challenge of the apparatus with agents and simulant, the inlet and purge airstreams were also monitored to determine the concentrations in the inlet 18 and the purge outlet 27. In addition, the pressure and temperature of the air in the inlet 18 was also monitored and recorded. The dewpoint of the air at the inlet 18 and the outlet 19 was also monitored.

The dosages of the agents and simulants detailed above in general exceeded those which might be expected to be encountered in real situations. Thus, if the apparatus described above with reference to the drawings is able to deal satisfactorily with such dosages, it will certainly deal with the lower dosages which are more likely to be encountered in the field.

The results of the tests were as follows.

In all cases, the pressure swing adsorber was found to provide full protection against the agents and simulants under both A1 and, where used, B3 meteorology conditions, meaning that no agent or simulant was detectable in the air leaving the outlet 19. The performance of the pressure swing adsorber 16 was shown to be unaffected by sustained challenge with high concentrations of water vapour. During assessments under B3 conditions, frequent weighing of the pressure swing adsorber 16 established that the water content of the pressure swing adsorber 16 stabilized (i.e. the weight of the pressure swing adsorber 16 did not continue to rise). This is plainly an essential prerequisite if the pressure swing adsorber 16 is to provide sustained protection against the NBC agent since, if the water content of the pressure swing adsorber 16 continues to increase, it will become saturated with water vapour and will lose its capacity for adsorbing agents and simulants which will then begin to pass into the outlet gas. The results obtained by weighing correlated with the observation that the dewpoint of the outlet air remained low (<-50°C) throughout all the tests.

During the tests, the pressure swing adsorber 16 was periodically purged using unpressurized air as described above. The test showed that the pressure swing adsorber 16 desorbed the bulk of the retained NBC agents during normal operation. The results demonstrated that the adsorber could be operated in the pressure swing adsorption mode for extended periods of time without compromising the working capacity of the adsorber 16. Thus, the ability of the pressure swing adsorber 16 to defeat challenge with agents and simulants over sustained periods of operation did not depend on the use of the thermal clean-up cycle.

The test also included a clean-up cycle using heated air at a temperature of about 180°. The test showed that this clean-up cycle removed contaminants that were not desorbed during the cycling of the pressure swing adsorber 16. On the basis of the sustained challenges to which the pressure swing adsorber 16 was exposed, and an analysis of the results of the clean-up cycle, the tests assessed the regeneration of the pressure swing adsorber 16 as resulting in the restoration of the adsorption capacity to at least 98% of its initial value. This small reduction in capacity, which was difficult to quantify accurately, was thought to be due to the presence of a small percentage of microporosity in the mesoporous carbon 20, which traps higher boiling point components. This small reduction has no impact on the performance of the pressure swing adsorber 16 so that the working capacity of the adsorber 16 is unaffected.

These tests demonstrate that the system described above with reference to the drawings offers the capability to provide broad band protection against a range of NBC hazards under worldwide conditions of meteorology. It also has the ability to protect against the threat from toxic industrial chemicals and battlefield contaminants.

As described above, the apparatus includes two pressure swing adsorbers 16a,16b, each having two layers, a layer of mesoporous carbon 20a,20b and a layer of 13X Zeolite molecular sieve 21a,21b. The mesoporous carbon layers 20a,20b adsorb higher boiling point NBC agents while the 13X Zeolite 21a,21b adsorbs the lower boiling point agents. It will be appreciated, however, that the mesoporous carbon 20a,20b could be separate from the 13X Zeolite 21a,21b and be subjected to a separate purge. In addition, the higher boiling point NBC agents could be removed by a material other than mesoporous carbon and the lower boiling point agents could be removed by a material other than 13X Zeolite, although tests so far have shown mesoporous carbon and 13X Zeolite to be the most efficient materials for these purposes.

It will be appreciated that, while the system described above with reference to the drawings has two pressure swing adsorbers 21a, 21b, there may be more than two such adsorbers. For example, there may be three such adsorbers or, for larger applications any multiple of two or three adsorbers.

## Claims

1. A method of removing chemical and biological agents from air for breathing by humans comprising removing higher boiling point agents from the air and then passing the air through an adsorbent in a pressure swing adsorber (16a,16b) to remove lower boiling point agents and water vapour.

2. A method according to claim 1 wherein the higher boiling point agents are removed by passing the air through a carbon filter (20a,20b).

3. A method according to claim 2 wherein the carbon of the carbon filter (20a,20b) is mesoporous carbon.

4. A method according to any one of claims 1 to 3 wherein the pressure swing adsorber (16a,16b) includes a 13X Zeolite.

5. A method according to claim 2 or claim 3, wherein the carbon filter (20a,20b) forms a first layer of the pressure swing adsorber (16a,16b), the adsorbent (21a,21b) of the pressure swing adsorber forming a second layer.

6. A method according to any one of claims 1 to 5 and including periodically performing a temperature sweep of the pressure swing adsorber (16a,16b) to desorb matter held by the pressure swing adsorber (16a,16b) and pass the matter to waste.

7. A method according to any one of claims 1 to 6 and comprising filtering the air prior to the removal of the higher boiling point agents to remove particulates.

8. A method according to any one of claims 1 to 7 and comprising removing liquid aerosols prior to the removal of the higher boiling point agents.

9. A method according to any one of claims 1 to 8 wherein first and second pressure swing adsorbers (16a,16b) are provided connected in parallel, the pressure swing adsorbers (16a,16b) being cycled so that the first pressure swing adsorber (16a) is adsorbing while the second pressure swing adsorber (16b) is being purged and vice versa.

10. A method according to claim 9 wherein the cycle time is less than 10 seconds, preferably 8 seconds.

11. A system for removing chemical and biological agents from air for breathing by humans comprising means (20a,20b) for removing higher boiling point agents from the air, and a pressure swing adsorber (16a,16b) for receiving air from the removing means and including an absorbent (21a,21b) for removing lower boiling point agents and water vapour from the air.

12. A system according to claim 11 wherein the means for removing higher boiling point agents comprises a carbon filter (20a,20b).

13. A system according to claim 12 wherein the carbon filter is a mesoporous carbon filter (20a,20b).

14. A system according to any one of claims 11 to 13 wherein the adsorbent of the pressure swing adsorber (16a,16b) includes a 13X molecular sieve (21a,21b).

15. A system according to any one of claims 11 to 14 where dependent on claim 12 wherein the carbon filter (20a,20b) forms a first layer of the pressure swing adsorber (16a,16b), the adsorbent (21a,21b) of the pressure swing adsorber forming a second layer.

16. A system according to any one of claims 11 to 15 and including means for supplying heated air to the adsorber to perform a temperature sweep of the pressure swing adsorber (16a,16b) to desorb matter held by the pressure swing adsorber (16a,16b) and pass the matter to waste.

17. A system according to any one of claims 11 to 16 and including means (11) for filtering the air to remove particulates, said means being arranged before the pressure swing adsorber (16a,16b) in the direction of flow of the air.

18. A system according to any one of claims 11 to 17 and including means (11) for removing liquid aerosols, said means (11) being arranged before the pressure swing adsorber (16a,16b) in the direction of flow of the air.

19. A system according to claim 17 or to claim 18 when dependent on claim 17 wherein the means for filtering the air and the means for removing liquid aerosols are formed by a single HEPA filter (11).

20. A system according to any one of claims 11 to 19 wherein a second removing means (20b) and a second pressure swing adsorber (16b) are provided, control means (31) being provided for cycling the first mentioned and the second removing means (20a,20b) and the first mentioned and the second pressure swing adsorber (16a,16b) so that the first-mentioned removing means (20a) and the first-mentioned pressure swing adsorber (16a) remove agents from air while the second removing means (20b) and the second pressure swing adsorber (16b) receive purge air to regenerate the second removing means (20b) and the second pressure swing adsorber (16b) and vice versa.

21. A system according to claim 20 wherein the control system controls the cycle time to less than 10 seconds, preferably 8 seconds.
